# EUROPEAN PATENT SPECIFICATION

(11) **EP 4 376 160 B1**
(45) Date of publication and mention of the grant of the patent: **01.04.2026**
(21) Application number: 23820122.2
(22) Date of filing: 08.06.2023
(51) Int. Cl.: H01M 10/42, H01M 50/271, H01M 10/6556, H01M 10/6551, H01M 10/6567, H01M 10/653, H01M 10/613, H01M 10/625, H01M 50/273, H01M 50/211, H01M 50/224, H01M 50/242, H01M 50/264, H01M 50/289, H01M 50/466

(54) **BATTERY PACK AND VEHICLE INCLUDING THE SAME**
AKKUMULATOR UND FAHRZEUG MIT DIESEM
BLOC-BATTERIE ET VEHICULE LE COMPRENANT

(30) Priority: 10.06.2022 KR 20220070537
(43) Date of publication of application: 29.05.2024
(73) Proprietor: LG Energy Solution, Ltd., Seoul 07335 (KR)
(72) Inventor: KIM, In-Soo, Daejeon 34122 (KR); PARK, Jin-Yong, Daejeon 34122 (KR); KWON, Woo-Yong, Daejeon 34122 (KR); KIM, Seung-Joon, Daejeon 34122 (KR); CHUNG, Se-Yun, Daejeon 34122 (KR); CHI, Ho-June, Daejeon 34122 (KR)
(74) Representative: Goddar, Heinz J.
(86) International application number: PCT/KR2023/007892
(87) International publication number: WO 2023/239187

(56) References cited:
- WO-A1-2022/005095
- WO-A1-2022/092677
- CN-A- 114 010 988
- DE-U1- 202021 100 964
- KR-A- 20210 133 886
- KR-A- 20220 001 227
- KR-A- 20220 023 434
- KR-A- 20220 070 835
- KR-A- 20220 070 837

## Description

### TECHNICAL FIELD

The present application claims priority to Korean Patent Application No. 10-2022-0070537 filed on June 10, 2022 in the Republic of Korea.

The present disclosure relates to a battery pack and a vehicle including the same, and more particularly, to a battery pack having a cooling function for thermal management of battery cells and a fire extinguishing function to suppress fire or fire spread when thermal events occur in specific battery cells and a vehicle including the same.

### BACKGROUND ART

In general, secondary batteries have the operating voltage of about 2.5V to 4.5V per battery. Accordingly, electric vehicles or energy storage systems requiring large capacity and high output use as an energy source a battery module including secondary batteries connected in series and/or in parallel and a battery pack including battery modules connected in series and/or in parallel.

The number of lithium secondary batteries in a battery module or the number of battery modules in a battery pack may increase depending on the output or capacity of the battery pack required for the electric vehicle.

Meanwhile, in an example, the battery modules of the battery pack for the electric vehicle include battery cells, a busbar frame electrically connecting the battery cells and a module housing accommodating the battery cells and the busbar frame, and are mounted on a pack tray. In general, the pack tray includes a plurality of beam frames to ensure durability against impact or vibration. Here, the beam frame refers to a structure that is extended from one wall of the pack tray and coupled to the other wall and plays a role in suppressing distortion or deformation of the pack tray. The battery modules may be disposed in the internal space of the pack tray divided by the beam frames, and each may be fixedly coupled to the pack tray using bolts.

Meanwhile, in the battery pack accommodating the battery modules, a gap between the battery modules and between the battery modules and the beam frames and the volume occupied by the module housings of the battery modules are the factors that reduce the energy density per unit volume of the battery pack. Recently, with an attempt to increase the energy capacity of the battery pack, many research and development activities focus on cell to pack (a process of directly assembling battery cells in a case of a battery pack without assembling battery cells into a battery module) type battery packs.

However, in the design of the cell to pack type battery packs, how to apply a cooling system for thermal management of battery cells and a fire extinguishing system for suppressing fire and fire spread when thermal events occur in battery cells, and further, how to apply the cooling system and the fire extinguishing system in the limited internal space of the battery pack for efficient space utilization is challenging.

KR 2022-0070837 A describes a battery pack with a heat diffusion suppression structure designed to enhance safety in lithium-ion batteries. It features a configuration where a water tank is placed above the battery modules and a heat sink below, allowing direct injection of cooling water into ignited cells to prevent flame spread.

KR 2022-0070835 A describes a battery pack with a thermal diffusion suppression structure aimed at enhancing fire safety in lithium-ion batteries. The design includes a water tank positioned above the battery cells and a heat sink below, enabling rapid cooling and containment in case of thermal runaway. SUMMARY

### Technical Problem

The present disclosure is designed to solve the above-described technical problem and therefore the present disclosure is directed to providing a cell to pack type battery pack having a fire extinguishing system to rapidly suppress a fire in a specific battery cell when a thermal event occurs in the specific battery cell received in a pack case.

The present disclosure is further directed to providing a cell to pack type battery pack for effectively dissipating heat from battery cells received in the battery pack.

The technical problem to be solved by the present disclosure is not limited to the above-described problems, and these and other problems will be clearly understood by those skilled in the art from the following description.

### Technical Solution

A battery pack according to an aspect of the present disclosure includes a plurality of cell units stacked in a direction, each cell unit including a cell stack including one battery cell or two or more battery cells stacked and a cell cover accommodating the cell stack; and a pack case including a pack tray on which the plurality of cell units is seated and a pack cover covering the plurality of cell units and coupled to the pack tray, wherein the cell cover has a top open portion not to cover an upper surface of the cell stack, and the pack cover has a fire extinguishing material input zone to feed a fire extinguishing material into the cell cover through the top open portion of the cell cover, and wherein at least a portion of the fire extinguishing material input zone is configured to be heat-melted so that the fire extinguishing material is fed into the cell cover.

The battery pack further includes a first thermal resin which is applied to the upper surface of the cell stack, and is not present in at least one of one end portion or the other end portion of the top open portion of the cell cover in a lengthwise direction of the cell cover, the pack cover contacts the first thermal resin, and the fire extinguishing material input zone is disposed at a location vertically facing the at least one of one end portion or the other end portion of the top open portion of the cell cover.

The fire extinguishing material input zone may be disposed vertically on each cell unit.

The fire extinguishing material may be cooling water, and the pack cover may include a flow channel in which the cooling water flows inside.

The fire extinguishing material input zone may include a hole in communication with the flow channel; and a melting cap coupled to the hole and made of a hot melt resin.

The fire extinguishing material input zone may include a fire extinguishing unit including a gas storage container in which compressed gas is received and having a gas outlet on one side, and a container lid made of a hot melt material and configured to close the gas outlet; and a unit mounting hole formed through the pack cover to allow the fire extinguishing unit to be coupled by interference fit with the container lid facing the top open portion of the cell cover.

The compressed gas may be carbon dioxide.

The container lid may have screw threads on an outer circumference, and the unit mounting hole may include a lid fastening hole to which the container lid is screw-coupled.

The cell unit may include a cell stack including one battery cell or two or more battery cells stacked; and a cell cover covering both sides of the cell stack in a widthwise direction of the cell stack and a bottom of the cell stack.

The cell cover may include a first side cover portion covering one side of the cell stack in a widthwise direction of the cell stack, and a second side cover portion covering the other side of the cell stack; and a lower cover portion integrally formed with the first side cover portion and the second side cover portion and covering a bottom of the cell stack.

The battery pack may include a busbar frame assembly including a busbar electrically connected to an electrode lead of the battery cell, and disposed on each of a front side and a rear side of the cell stack in a lengthwise direction of the cell stack and coupled to the cell cover.

The battery pack may further include a thermal insulation pad between the cell units among the plurality of cell units.

A second thermal resin may be interposed between a lower cover portion of the cell cover and a surface of the pack tray.

The battery cell may be a pouch type battery cell.

According to another aspect of the present disclosure, there is provided a vehicle including the above-described battery pack.

### Advantageous Effects

According to an aspect of the present disclosure, it may be possible to provide the cell to pack type battery pack having the fire extinguishing system to rapidly suppress a fire in a specific battery cell when a thermal event occurs in the specific battery cell received in the pack case.

Additionally, according to the battery pack according to the present disclosure, when a fire occurs in a specific battery cell, a fire extinguishing material may fall down on the pack cover located on the specific battery cell, thereby suppressing the fire in the specific battery cell and preventing thermal energy propagation to the other adjacent battery cells.

Additionally, according to another aspect of the present disclosure, heat may be transferred between the pack cover having the flow channel in which cooling water flows and the battery cells, and when a fire occurs in the battery cell or heat is generated from the battery cell, a portion of the pack cover may be heat-melted to pour cooling water down. Accordingly, the cooling water may absorb the heat from the battery cells in a normal situation, and may be used as a fire extinguishing material in the event of the fire in the battery cell.

The present disclosure may have many other effects, and such effects will be described in each embodiment, or description of effects that can be easily inferred by those skilled in the art is omitted.

### BRIEF DESCRIPTION OF THE DRAWINGS

FIG. 1 is a diagram showing a schematic configuration of a battery pack according to an embodiment of the present disclosure.
FIG. 2 is a perspective view schematically showing a cell unit group according to an embodiment of the present disclosure.
FIG. 3 is a perspective view of a cell unit according to an embodiment of the present disclosure.
FIG. 4 is an exploded perspective view of the cell unit of FIG. 3.
FIG. 5 is an enlarged diagram of an end portion of the cell unit of FIG. 3.
FIGS. 6 and 7 are diagrams schematically showing a fire extinguishing configuration of a pack tray according to an embodiment of the present disclosure.
FIG. 8 is a diagram schematically showing a cooling configuration of a pack tray according to an embodiment of the present disclosure.
FIG. 9 is a diagram schematically showing a configuration of a battery pack according to another embodiment of the present disclosure.
FIGS. 10 to 12 are diagrams schematically showing a fire extinguishing configuration according to another embodiment of the present disclosure.
FIG. 13 is a diagram schematically showing a vehicle including the battery pack according to the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time that the application was filed.

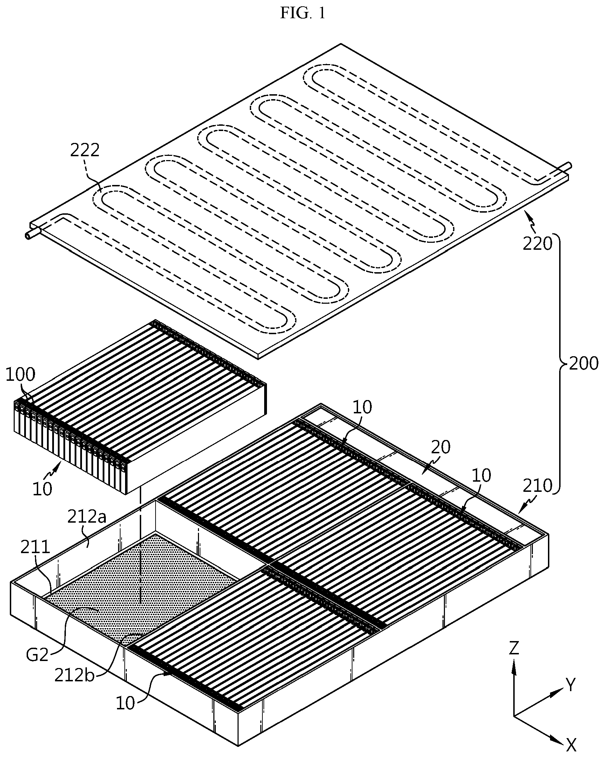

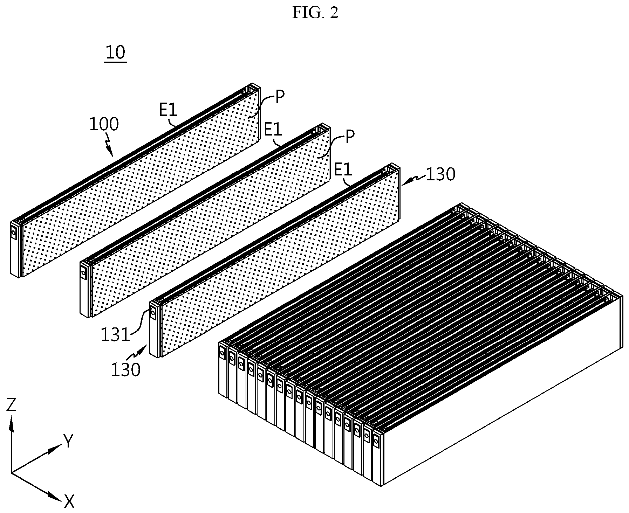

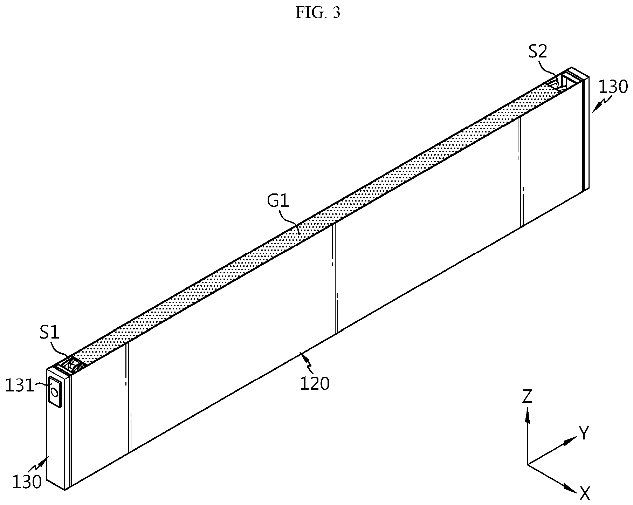

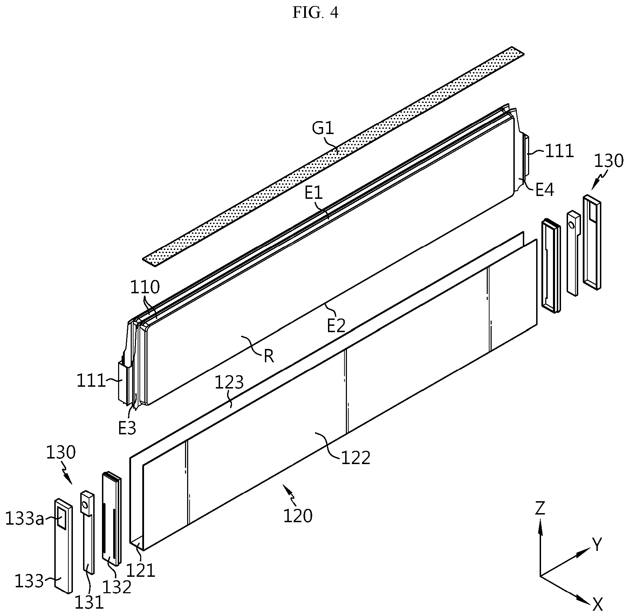

FIG. 1 is a diagram showing a schematic configuration of a battery pack according to an embodiment of the present disclosure, FIG. 2 is a perspective view schematically showing a cell unit group according to an embodiment of the present disclosure, FIG. 3 is a perspective view of a cell unit according to an embodiment of the present disclosure, and FIG. 4 is an exploded perspective view of the cell unit of FIG. 3.

Referring to FIGS. 1 to 4, the battery pack according to an embodiment of the present disclosure includes a plurality of cell units 100 and a pack case 200 accommodating the plurality of cell units 100.

The cell unit 100 includes one battery cell 110 or two or more battery cells 110 stacked and a cell cover 120.

The battery cell 110 may include a pouch type battery cell 110. The pouch type battery cell 110 includes an electrode assembly, a pouch case accommodating the electrode assembly and the electrode lead 111 connected to the electrode assembly and exposed to the outside of the pouch case. The electrode lead 111 includes a pair of positive and negative electrode leads. Here, the positive electrode lead and the negative electrode lead may be disposed at two ends of the battery cell 110 in the lengthwise direction of the battery cell 110.

A preset number of pouch type battery cells 110 may be stacked in a direction (X direction) with wide surfaces standing perpendicular to the ground. Hereinafter, a cell stack refers to a stack of pouch type battery cells 110 as described above. For example, as shown in FIG. 4, two pouch type battery cells 110 may be stacked in a direction. In this instance, the positive electrode lead of each pouch type battery cell 110 may be disposed facing frontwards (-Y direction) and the negative electrode lead of each pouch type battery cell 110 may be disposed facing rearwards (+Y direction). In this case, the two pouch type battery cells 110 may be connected in parallel to form a power bank by welding the electrode leads 111 of the same polarity to the terminal busbar 131 located at the corresponding side.

That is, the two pouch type battery cells 110 may be received in the cell cover 120 while being kept in the stacked state and may be connected in parallel through the medium of the terminal busbar 131 of the busbar frame assembly 130. The terminal busbar 131 may have an exposed portion and act as a positive terminal or a negative terminal of the cell unit 100. Although this embodiment shows the cell unit 100 including the two pouch type battery cells 110, the cell unit 100 may include one, three or four or more pouch type battery cells 110.

Meanwhile, the pouch type battery cell 110 may include a receiving portion R where the electrode assembly is received in the pouch case, and four edge portions E1~E4 surrounding the receiving portion R. For example, as shown in FIG. 4, the four edge portions E1~E4 include the upper edge portion E1, the lower edge portion E2, the front edge portion E3 and the rear edge portion E4 on the basis of the receiving portion R in the pouch type battery cell 110 standing upright.

Here, all the edge portions E1~E4 may be a sealing portion or the remaining three edge portions E2,E3,E4 or E1,E3,E4 except the upper edge portion E1 or the lower edge portion E2 may be a sealing portion. In addition, when receiving the electrode assembly, the pouch type battery cell 110 using a method of folding a sheet of laminate film has three sealing portions, and the pouch type battery cell 110 using a method of joining the edges of two sheets of laminate films has four sealing portions. Accordingly, in the pouch type battery cell 110, three edge portions E2,E3,E4 or E1,E3,E4 may be a sealing portion or all the four edge portions E1~E4 may be a sealing portion.

The cell cover 120 is the component that accommodates or supports the cell stack to stably keep the cell stack upright in the pack case 200. For example, the cell cover 120 may cover the lower edge portion E2 of one pouch type battery cell 110 and both surfaces of the receiving portion R. Alternatively, as in this embodiment, the cell cover 120 may cover the lower edge portion of the two pouch type battery cells 110 that form the cell stack, and one surface of the receiving portion of the first pouch type battery cell 110 in the stacking order and one surface of the receiving portion of the second pouch type battery cell 110. That is, the cell cover 120 may cover both sides of the cell stack in the widthwise direction of the cell stack and the bottom of the cell stack. The cell cover 120 may have approximately a 'U' shaped longitudinal cross section with a top open portion through which the upper surface of the cell stack (corresponding to the upper edge portion of the pouch type battery cell 110) may be exposed when the cell stack is received.

The cell cover 120 may be made of a variety of materials. In particular, the cell cover 120 may be made of a metal to ensure the strength. The metal may keep the pouch type battery cells 110 in the stacked state more stably, and protect the pouch type battery cells 110 from external impact more safely. For example, the cell cover 120 may be made of stainless steel (SUS) or an alloy including stainless steel.

In addition, since the pouch case is made of a soft material, due to low hardness, it is not easy to fixedly receive the pouch type battery cell 110 in the pack case 200 and the pouch type battery cell 110 may be vulnerable to external impact or vibration. The cell cover 120 is the component for addressing the above-described disadvantage of the pouch type battery cell 110, and stably maintains the pouch type battery cells 110 in the stacked state. The cell cover 120 may be a foil having the thickness of approximately 2 mm to minimize the occupied volume in the pack case 200.

Specifically, describing the structure of the cell cover 120 according to this embodiment, the cell cover 120 includes a lower cover portion 121, a first side cover portion 122 and a second side cover portion 123 as shown in FIGS. 3 and 4.

The lower cover portion 121 may be configured to cover the lower edge portion E2 of the pouch type battery cell 110 received inside. The lower cover portion 121 may contact the lower edge portion E2 of the pouch type battery cell 110 or may be spaced apart from the lower edge portion E2 of the pouch type battery cell 110. When the cell unit 100 is seated on the pack tray 210, the cell cover 120 may be seated such that the lower cover portion 121 contacts a bottom plate 211 of the pack tray 210.

The first side cover portion 122 may extend in the upward direction from one edge line in the widthwise direction of the lower cover portion 121. For example, the first side cover portion 122 may extend longer than the receiving portion R of the pouch type battery cell 110 in the upward direction from the left end of the lower cover portion 121.

The first side cover portion 122 may be configured to cover one side of the at least one pouch type battery cell 110. For example, the first side cover portion 122 may be configured to cover one side of the cell stack in the widthwise direction of the cell stack in FIG. 4.

The second side cover portion 123 may extend in the upward direction from the other edge line in the widthwise direction of the lower cover portion 121. For example, the second side cover portion 123 may extend longer than the receiving portion R of the pouch type battery cell 110 in the upward direction from the right end of the lower cover portion 121.

The second side cover portion 123 may be configured to cover one side of the at least one pouch type battery cell 110. For example, the second side cover portion 123 may be configured to cover the other side of the cell stack in the widthwise direction of the cell stack in FIG. 4.

The first side cover portion 122 and the second side cover portion 123 may be integrally formed with the lower cover portion 121. The distance between the first side cover portion 122 and the second side cover portion 123 may be determined in a range in which the pouch type battery cells 110 received in the cell cover 120 may be compressed.

By the structure of the cell cover 120, the pouch type battery cells 110 may be compressed by the cell cover 120 and the upper edge portion E1 may be exposed through the top of the cell cover 120 and come into direct contact with the pack cover 220 as described below. Additionally, the lower cover portion 121 of the cell cover 120 may come into direct contact with the bottom plate 211 of the pack case 200. In this case, heat may be transferred more smoothly between the lower edge portion of the pouch type battery cells 110 and the bottom plate 211 of the pack case 200. In addition, a second thermal resin G2 may be applied to the bottom plate 211 of the pack case 200 to enhance the heat transfer between the pouch type battery cell 110, the lower cover portion 121 of the cell cover 120 and the bottom plate 24 of the pack case 20.

Accordingly, when the pouch type battery cells 110 are mounted in the pack case 20 using the cell cover 120 of the above-described structure, the pouch type battery cells 110 may be arranged in the pack case 20 with space efficiency, the pouch type battery cells 110 may be stably kept in the stacked state and the cooling structure for the pouch type battery cells 110 may be simple and efficient.

Referring back to FIGS. 3 and 4, the cell unit 100 according to an embodiment of the present disclosure may include a busbar frame assembly 130.

The busbar frame assembly 130 may include a terminal busbar 131 electrically connected to the electrode lead 111 of the pouch type battery cell 110 and may be disposed at each of the front side and the rear side of the cell stack in the lengthwise direction of the cell stack.

The busbar frame assembly 130 may include a first busbar frame assembly and a second busbar frame assembly. The first busbar frame assembly and the second busbar frame assembly may have substantially the same structure.

In this embodiment, all the positive electrode leads of the two stacked pouch type battery cells 110 may be welded to the terminal busbar 131 of the first busbar frame assembly, and all the negative electrode leads may be welded to the terminal busbar 131 of the second busbar frame assembly. In this case, the two pouch type battery cells 110 have an electrical connection structure of 2P1S configuration.

Describing the main components of the busbar frame assembly 130, the busbar frame assembly 130 may include the terminal busbar 131, the busbar housing 132 and a busbar cover 133 as shown in FIG. 4.

The terminal busbar 131 may be, for example, made of a metal such as copper, nickel and aluminum, and the busbar housing 132 may be, for example, made of an electrically insulating material such as plastics.

The busbar housing 132 may support the terminal busbar 131 and may be coupled to the cell cover 120. That is, the busbar housing 132 may be coupled to each of a front open end and a rear open end of the cell cover 120 as shown in FIG. 3. In this instance, the busbar housing 132 may be fixedly coupled to the cell cover 120 through a variety of coupling methods, for example, adhesion, welding, interference fitting, hooking, bolting, riveting. In this embodiment, each of the front open end and the rear open end of the cell cover 120 may be covered by the busbar housing 132.

The busbar housing 132 may be in the shape of a box of an approximately cubic structure. The busbar housing 132 may have a slit into which the electrode lead 111 is inserted, to allow the electrode lead 111 of the battery cell 110 to pass through the body. The electrode lead 111 of the battery cell 110 may be drawn out through the busbar housing 132 via the slit, and the drawn portion may be attached to the terminal busbar 131. When attaching the electrode lead 111 to the terminal busbar 131, laser welding may be performed. Additionally, the coupled part between the electrode lead 111 and the terminal busbar 131 may be covered with the busbar cover 133 made of an insulating material, and an upper end portion of the terminal busbar 131 having a greater thickness than the other portion may be exposed through a window 133a of the busbar cover 133.

A plurality of cell units 100 according to an embodiment of the present disclosure may be stacked in a direction as shown in FIG. 2. Although not shown in FIG. 2, in the stacked cell units 100, a first thermal resin may be applied to the upper surface of the cell stack (corresponding to the upper edge portion E1 of the pouch type battery cell 110) exposed through the top open portion of each cell cover 120. In this instance, the first thermal resin may be applied to the remaining area except the two end portions on the upper surface of the cell stack along the lengthwise direction of the cell stack. It will be described in more detail below.

Additionally, as shown in FIG. 2, a thermal insulation pad P may be disposed between the cell units 100. For example, the thermal insulation pad P may be attached to one side or both sides of the cell unit 100. The thermal insulation pad P plays a role in blocking heat exchange between the cell units 100. The thermal insulation pad P may include a silicone or mica sheet. The stacked cell units 100 will be referred to as a cell unit group 10.

Meanwhile, the battery pack 200 according to an embodiment of the present disclosure may include a pack tray 210 and a pack cover 220.

As shown in FIG. 1, the pack tray 210 includes the bottom plate 211 and a plurality of beam frames disposed perpendicular to the bottom plate 211 to form a wall. The plurality of beam frames may include an outer beam frame 212a that forms a wall along the outer periphery of the bottom plate 211 and an inner beam frame 212b that divides the internal space of the pack tray 210 across the bottom plate 211 inside of the bottom plate 211.

Each cell unit group 10 may be seated in the divided internal space of the pack tray 210 surrounded by the plurality of beam frames. For example, as shown in FIG. 1, each cell unit group 10 may be seated in the internal space of the pack tray 210 surrounded by the outer beam frame 212a and the inner beam frame 212b of the pack tray 210. Although the pack tray 210 according to this embodiment is configured to receive four cell unit groups 10, the pack tray 210 may be configured to receive less than four cell unit groups 10 or four or more cell unit groups 10 by changing the area of the bottom plate 211 of the pack tray 210 or the number or location of the outer beam frame 212a and the inner beam frame 212b.

When each cell unit group 10 is mounted in the pack tray 210, the outermost cell unit 100 among the cell units 100 in each cell unit group 10 may be disposed in contact with the outer beam frame 212a or the inner beam frame 212b. In this case, the beam frames may support the two outermost cell units 100 of each cell unit group 10, thereby suppressing swelling of the battery cells 110 during charging and discharging. Additionally, when a thermal event occurs in a certain cell unit group 10, the beam frames may act as a firewall to stop thermal energy transfer between the cell unit groups 10. To enhance the function as the firewall, a thermal insulation material such as a mica sheet may be attached to the surface of the beam frame.

The second thermal resin G2 may be applied to the bottom plate 211 of the pack tray 210. As described above, the second thermal resin G2 may accelerate heat exchange between the lower cover portion 121 of the cell cover 120 and the bottom plate 211 of the pack tray 210 and enhance immobilization of the cell units 100.

As shown in FIG. 1, the pack cover 220 may cover the plurality of cell units 100 and may be coupled to the pack tray 210.

In particular, the pack cover 220 according to the present disclosure may include a fire extinguishing material input zone 221 to feed a fire extinguishing material into the cell cover 120 through the top open portion of the cell cover 120.

Hereinafter, the architecture of a fire extinguishing system of the battery pack according to an embodiment of the present disclosure will be described with reference to FIGS. 1, 3 and 5 to 7.

The pack cover 220 according to an embodiment of the present disclosure may include a flow channel 222 in which cooling water flows and a fire extinguishing material input zone 221 disposed at each preset location of the pack cover 220. Here, the preset location may refer to a location vertically on each cell unit 100. That is, each fire extinguishing material input zone 221 may be disposed vertically on each cell unit 100.

The flow channel 222 may be formed in the pack cover 220 in a zigzag or serpentine shape as shown in FIG. 1. For example, the pack cover 220 may have an inlet port and an outlet port, and the inlet port may be connected to an entrance of the flow channel 222 and the outlet port may be connected to an exit of the flow channel 222. The cooling water may flow along the flow channel 222 through the inlet port and leave the pack cover 220 through the outlet port. Although not shown, the inlet port and the outlet port may be connected to a chiller. In this case, the cooling water may absorb heat inside of the pack case 200 while it is flowing along the flow channel 222, and heat may be removed by the chiller from the cooling water having absorbed the heat. Additionally, the cooling water from which heat was removed may enter the flow channel 222 again through the inlet port. That is, the cooling water may be circulated in an order of the inlet port, the flow channel 222, the outlet port, the chiller and the inlet port.

Meanwhile, as an alternative to the pack cover 220 having the flow channel 222, a fire extinguishing tank type pack cover 220 that stores a predetermined amount of water or fire extinguishing material may be applied.

At least a portion of the fire extinguishing material input zone 221 may be configured to be heat-melted so that the fire extinguishing material may fall down and fill the cell cover 120 of each cell unit 100.

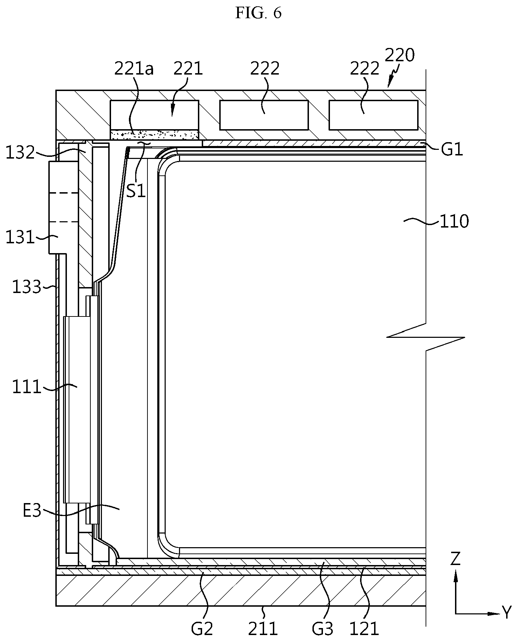

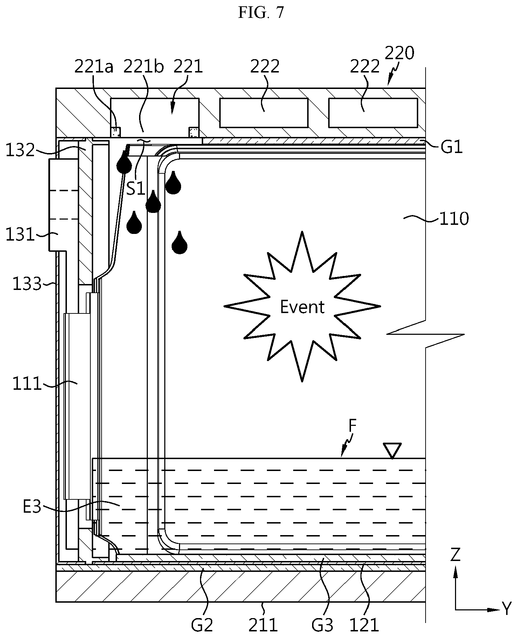

Referring to FIGS. 6 and 7, the fire extinguishing material input zone 221 according to this embodiment includes a hole 221b in communication with the flow channel 222 and a melting cap 221a coupled to the hole 221b and made of a hot melt resin. The hole 221b may be formed by drilling a specific region of the lower surface of the pack cover 220 to communicate with the flow channel 222. The melting cap 221a may be configured to close the hole 221b. Accordingly, in a normal situation, the cooling water in the pack cover 220 may flow along the flow channel 222 without leaks in the pack cover 220. Additionally, in case where a thermal event occurs in the battery pack, when the melting cap 221a melts by heat, the cooling water in the pack cover 220 may pour into the battery pack. That is, in this embodiment, the cooling water may be used as a fire extinguishing material for suppressing the thermal event.

In particular, the battery pack according to an embodiment of the present disclosure includes the plurality of cell units 100 stacked as described above, and when a fire occurs in a specific cell unit 100 among the plurality of cell units 100, may be configured to allow cooling water to pour down on the specific cell unit 100 to lower the temperature of the battery cells 110 included in the specific cell unit 100, thereby preventing or delaying heat propagation to the adjacent cell units 100.

To this end, the fire extinguishing material input zone 221 according to an embodiment of the present disclosure may be disposed vertically on each cell unit 100. As described above, the cell cover 120 of the cell unit 100 has approximately the 'U' shaped longitudinal cross section with the top open portion. Accordingly, when a thermal event occurs in the battery cell 110, high temperature gases, flames and sparks generated from the battery cell 110 are directed toward the pack cover 220 through the top open portion of the cell cover 120. In this instance, when heat is intensively applied to the melting cap 221a located vertically on the battery cell 110 in which the thermal event occurred and the melting cap 221a melts, the hole 221b may be open and cooling water may fall down and go into the cell cover 120 through the top open portion.

The battery pack according to an embodiment of the present disclosure may further include the first thermal resin G1 between the cell units 100 and the cell cover 120 to accelerate heat exchange between the cell units 100 and the cell cover 120.

The first thermal resin G1 may be applied to the upper surface of the cell stack (the upper edge portion of the pouch type battery cell 110), and may not be present in at least one of one end portion S1 or the other end portion S2 of the top open portion of the cell cover 120 in the lengthwise direction of the cell cover 120. Additionally, the pack cover 220 may contact the first thermal resin G1, and the fire extinguishing material input zone 221 of the pack cover 220 may be disposed at a location vertically facing at least one of one end portion S1 or the two end portions of the top open portion of the cell cover 120.

Specifically, as in this embodiment shown in FIG. 3, since the first thermal resin G1 is applied to the upper edge portion E1 of the pouch type battery cells 110 received in the cell cover 120, the top open portion of the cell cover 120 may be partially covered by the first thermal resin G1. However, the first thermal resin G1 is not applied or filled in one end portion S1 and the other end portion S2 of the top open portion of the cell cover 120. The one end portion S1 and the other end portion S2 of the top open portion of the cell cover 120 not covered with the first thermal resin G1 may act as an inlet for feeding the fire extinguishing material into the cell cover 120.

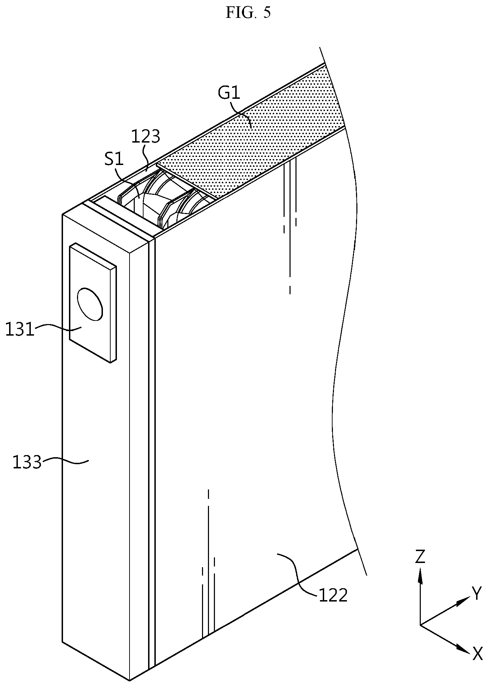

Referring to FIGS. 5 and 6, the front edge portion E3 and the rear edge portion E4 of the pouch type battery cell 110 may be located below one end portion S1 and the other end portion S2 of the top open portion of the cell cover 120 respectively. The front edge portion E3 and the rear edge portion E4 of the pouch type battery cell 110 are the heat-welded sealing portion of the pouch case. Accordingly, the area at which the front edge portion E3 and the rear edge portion E4 of the pouch type battery cell 110 are located in the cell cover 120 has a higher volume of empty space than the other areas. Additionally, the pouch type battery cell 110 has higher temperature at the front edge portion E3 and the rear edge portion E4 where the electrode lead 111 is drawn, and when the internal pressure rises, there is a high likelihood that the front edge portion E3 or the rear edge portion E4 breaks or tears open and high temperature gases or sparks leak.

Accordingly, placing the fire extinguishing material input zone 221 vertically on one end portion S1 and the other end portion S2 of the top open portion of the cell cover 120 may be effective in feeding the fire extinguishing material accurately and rapidly into the specific cell unit 100 in which the thermal event occurred.

By the structure of the fire extinguishing material input zone 221 and the cell unit 100 according to this embodiment, for example, when high temperature gases are given off from the battery cell 110 included in the specific cell unit 100 among the plurality of cell units 100, the melting cap 221a melts by the high temperature gases, and in this instance, as shown in FIG. 7, the hole 221b is open. Then, cooling water in the pack cover 220 may pour down and fill the cell cover 120 through one end portion S1 of the top open portion of the cell cover 120.

Additionally, by the configuration of the present disclosure, the melting cap 221a located on the cell cover 120 accommodating the battery cell 110 in which the event occurred melts when it is heated, but the melting cap 221a located on the other cell cover 120 accommodating the battery cell 110 in which the event did not occur does not melt due to no or little thermal damage. Accordingly, as indicated by F in FIG. 7, cooling water is only filled in the cell cover 120 accommodating the battery cell 110 in which the event occurred.

Accordingly, the fire extinguishing system of the battery pack according to the present disclosure is configured to feed the fire extinguishing material into only the specific cell unit 100 in which the thermal event occurred to cool down only the specific cell unit, thereby preventing heat propagation to the other adjacent cell units 100 and preventing battery cells in another cell unit from being flooded with the cooling water. Accordingly, it may be possible to re-use the battery cells 110 not flooded by the cooling water.

Meanwhile, the battery pack according to an embodiment of the present disclosure is configured to dissipate heat from the battery cells 110 through the pack tray 210 and the pack cover 220, and block heat exchange between the cell units 100.

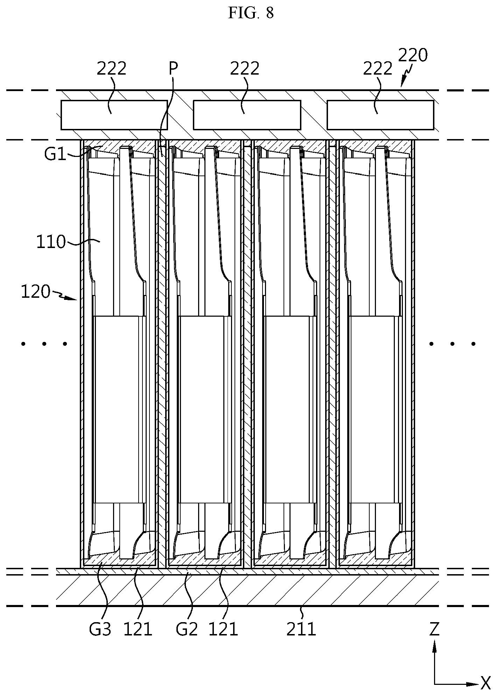

Specifically, as shown in FIG. 8, the bottom plate 211 of the pack tray 210 on which the cell units 100 are seated may include the second thermal resin G2. That is, the second thermal resin G2 may be present between the lower cover portion 121 of each cell cover 120 and the surface of the pack tray 210. Additionally, in each cell unit 100, a third thermal resin G3 may be interposed between the lower edge portion E2 of the pouch type battery cell 110 and the lower cover portion 121 of the cell cover 120 within the cell cover 120. When the third thermal resin G3 is filled without an empty space between the lower edge portion of the pouch type battery cell 110 and the lower cover portion 121 of the cell cover 120, it may be possible to accelerate heat exchange between the pouch type battery cell 110 and the cell cover 120. Furthermore, it may be possible to enhance immobilization of the pouch type battery cells 110 in the cell cover 120.

By the above-described configuration, heat from all the battery cells 110 mounted in the battery pack may be transferred to the lower edge portion -> the third thermal resin G3 -> the lower cover portion 121 of the cell cover 120 -> the second thermal resin G2 -> the bottom plate 211 of the pack tray 210. Although not shown, a heatsink (not shown) may be disposed below the pack tray 210 or cooling water may be allowed to flow in the pack tray 210 in order to increase the cooling effect. Additionally, heat from all the battery cells 110 may be transferred to the upper edge portion -> the first thermal resin G1 -> the cooling water in the pack cover 220.

Additionally, it may be possible to block heat exchange between the cell units 100 by the thermal insulation pad P between the cell units 100. In this case, in each cell unit 100, as the temperature gradient increases toward the pack cover 220 or the pack tray 210, heat may be transferred to the pack cover 220 or the pack tray 210 faster.

By the cooling configuration of the battery pack of the present disclosure, it may be possible to minimize heat transfer between the battery cells 110 included in different cell units 100 and allow heat from all the battery cells 110 to move in the vertical direction and exit through the pack case 200. Accordingly, it may be possible to provide the battery pack with improved cooling performance for all the battery cells 110.

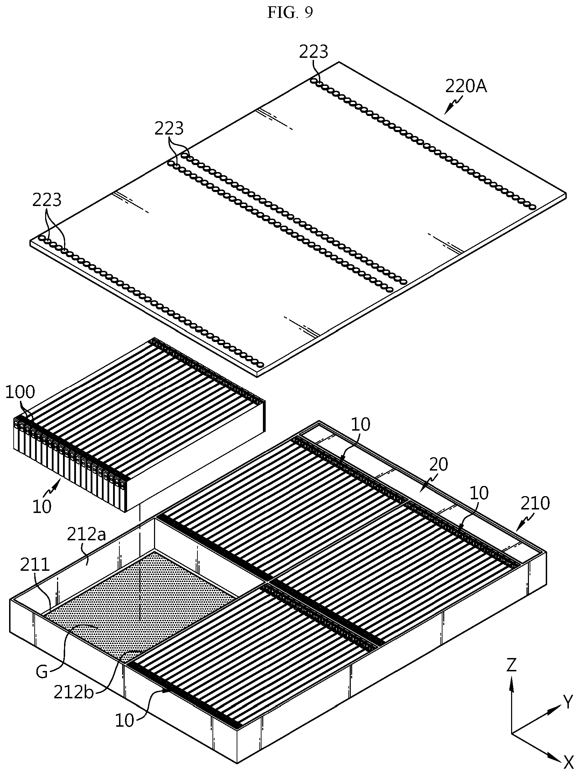

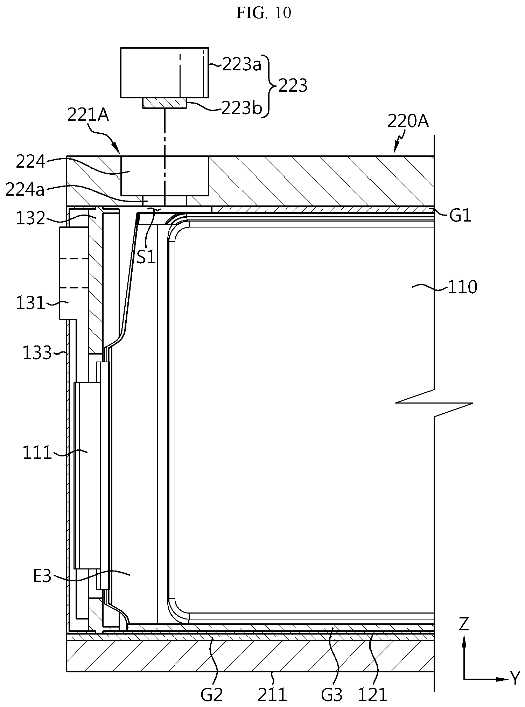

FIG. 9 is a diagram schematically showing a configuration of a battery pack according to another embodiment of the present disclosure, and FIGS. 10 to 12 are diagrams schematically showing a fire extinguishing configuration according to another embodiment of the present disclosure.

Subsequently, the battery pack according to another embodiment of the present disclosure will be described with reference to FIGS. 9 to 12.

The same reference number as the above-described embodiment denotes the same element, and redundant description of the same element is omitted and difference(s) between this embodiment and the above-described embodiment will be described.

When compared with the battery pack according to the above-described embodiment, the battery pack according to another embodiment of the present disclosure has a difference in the pack cover 220A and the fire extinguishing material input zone 221A.

As shown in FIG. 9, in the same way as the above-described embodiment, the fire extinguishing material input zone 221A according to this embodiment is disposed vertically on each cell unit 100 and located at one end portion S1 and the other end portion S2 of the top open portion of the cell cover 120. Where necessary, the fire extinguishing material input zone 221 may be disposed at only one of one end portion S1 and the other end portion S2 of the top open portion of the cell cover 120. However, the pack cover 220A according to another embodiment of the present disclosure does not have the cooling water and the flow channel 222. Instead, at least a portion of the pack cover 220A may be configured to be heat-melted so that compressed gas for cooling as a fire extinguishing material may be fed into the cell cover 120.

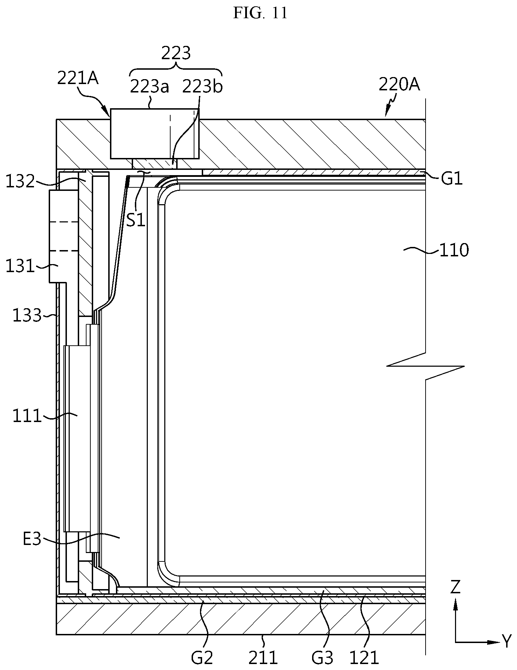

Specifically, referring to FIGS. 10 and 11, the fire extinguishing material input zone 221A according to an embodiment of the present disclosure includes a fire extinguishing unit 223 and a unit mounting hole 224 to which the fire extinguishing unit 223 is coupled by interference fit.

The fire extinguishing unit 223 may contain the compressed gas for cooling, and may be coupled and decoupled to/from the unit mounting hole 224. Accordingly, when the compressed gas for cooling is used up or a fault or failure is detected, the fire extinguishing unit 223 may be separated from the unit mounting hole 224 and replaced with a new one.

For example, the fire extinguishing unit 223 may include a gas storage container 223a in which the compressed gas is received, and having a gas outlet on one side, and a container lid 223b made of a hot melt material and configured to close the gas outlet.

The unit mounting hole 224 may be where the fire extinguishing unit 223 is fixedly mounted in the pack cover 220. The unit mounting hole 224 may be open in the thicknesswise direction of the pack cover 220, to allow the fire extinguishing unit 223 to be coupled by interference fit with the container lid 223b facing the top open portion of the cell cover 120.

The container lid 223b may have screw threads on the outer circumference, and the unit mounting hole 224 may include a lid fastening hole 224a to which the container lid 223b is screw-coupled.

By the above-described configuration, as shown in FIG. 11, the fire extinguishing unit 223 may be inserted into the unit mounting hole 224, and in this instance, the fire extinguishing unit 223 may be fixed to the unit mounting hole 224 by screw coupling of the container lid 223b and the lid fastening hole 224a.

Additionally, the container lid 223b coupled to the lid fastening hole 224a may be disposed facing one end portion S1 or the other end portion S2 of the top open portion of the cell cover 120.

Accordingly, like the above-described embodiment in which when a thermal event occurs, the melting cap 221a melts by heat to pour down the cooling water in the pack cover 220, in the case of another embodiment of the present disclosure, when a thermal event occurs, the container lid 223b melts by heat to feed the compressed gas into the cell cover 120.

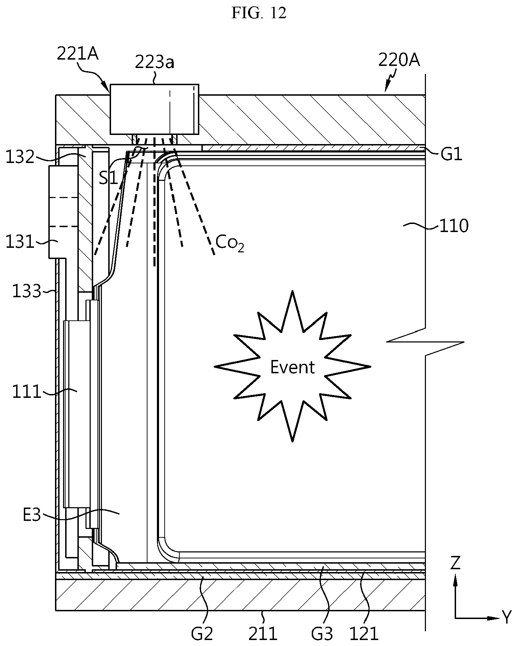

The compressed gas may include carbon dioxide (Co2). That is, the gas storage container 223a contains compressed carbon dioxide therein. When the container lid 223b melts by heat and the gas outlet of the gas storage container 223a is open even a little bit, the carbon dioxide may move out of the gas storage container 223a very fast and cool down the battery cell 110 and air in the cell cover 120 through adiabatic expansion as shown in FIG. 12.

By the fire extinguishing configuration of the battery pack according to another embodiment of the present disclosure, gaseous carbon dioxide may be fed into the target cell cover 120 to cool down air in the target cell cover 120 and the battery cell 110 in which the thermal event occurred. Accordingly, according to another embodiment of the present disclosure, compared to when cooling water is used as the fire extinguishing material, it may be possible to avoid an electrical safety related problem such as a short that may occur due to the flooding of the battery cell 110.

Meanwhile, the battery pack may further include a control module 20. The control module 20 may include a Battery Management System (BMS) to manage the charge·discharge operation, State Of Charge (SOC) and State Of Health (SOH) of the battery cells 110 and may be mounted in the internal space of the pack case 200. Additionally, the battery pack may further include a switching unit. The switching unit may be configured to control electrical connection between the battery pack and an external circuit. To this end, the switching unit may optionally include a current sensor, a power relay, a fuse or the like.

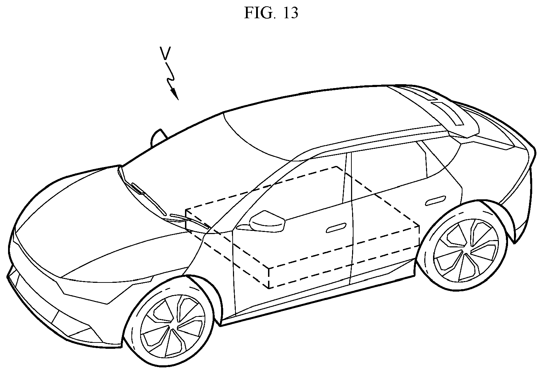

The battery pack according to the present disclosure may be used as an energy source for driving a vehicle. That is, the vehicle V according to the present disclosure may include the above-described battery pack according to the present disclosure as shown in FIG. 13. Here, the vehicle according to the present disclosure may include, for example, a predetermined vehicle that is powered by electricity such as an electric vehicle or a hybrid electric vehicle. Additionally, in addition to the battery pack according to the present disclosure, the vehicle according to the present disclosure may further include a variety of other components included in the vehicle, for example, a vehicle body or a motor.

The terms indicating directions such as upper, lower, left, right, front and rear are used for convenience of description, but it is obvious to those skilled in the art that the terms may change depending on the position of the stated element or an observer.

## Claims

1. A battery pack (200, 200A), comprising:
a plurality of cell units (100) stacked in a direction (X), each cell unit (100) including a cell stack including one battery cell (110) or two or more battery cells (110) stacked and a cell cover (120) accommodating the cell stack; and
a pack case (200, 200A) including a pack tray (210) on which the plurality of cell units (100) is seated and a pack cover (220) covering the plurality of cell units (100) and coupled to the pack tray (210),
wherein the cell cover (120) has a top open portion not to cover an upper surface of the cell stack, and the pack cover (220) has a fire extinguishing material input zone (221) to feed a fire extinguishing material into the cell cover (120) through the top open portion of the cell cover (120), and
wherein at least a portion of the fire extinguishing material input zone (221) is configured to be heat-melted so that the fire extinguishing material is fed into the cell cover (120),
**characterized by**
the battery pack (200, 200A) further comprising:
a first thermal resin (G1) which is applied to the upper surface of the cell stack, and is not present in at least one of one end portion or the other end portion of the top open portion of the cell cover (120) in a lengthwise direction (Y) of the cell cover (120),
wherein the pack cover (220) contacts the first thermal resin (G1), and the fire extinguishing material input zone (221) is disposed at a location vertically facing the at least one of one end portion or the other end portion of the top open portion of the cell cover (120).

2. The battery pack (200, 200A) according to claim 1, wherein the fire extinguishing material input zone (221) is disposed vertically on each cell unit (100).

3. The battery pack (200, 200A) according to claim 1, wherein the fire extinguishing material is cooling water, and
wherein the pack cover (220) includes a flow channel (222) in which the cooling water flows inside.

4. The battery pack (200, 200A) according to claim 3, wherein the fire extinguishing material input zone (221) includes:
a hole (221b) in communication with the flow channel (222); and
a melting cap (221a) coupled to the hole (221b) and made of a hot melt resin.

5. The battery pack (200, 200A) according to claim 1, wherein the fire extinguishing material input zone (221) includes:
a fire extinguishing unit (223) including a gas storage container (223a) in which compressed gas is received and having a gas outlet on one side, and a container lid (223b) made of a hot melt material and configured to close the gas outlet; and
a unit mounting hole (224) formed through the pack cover (220) to allow the fire extinguishing unit (223) to be coupled by interference fit with the container lid (223b) facing the top open portion of the cell cover (120).

6. The battery pack (200, 200A) according to claim 5, wherein the compressed gas is carbon dioxide.

7. The battery pack (200, 200A) according to claim 5, wherein the container lid (223b) has screw threads on an outer circumference, and the unit mounting hole (224) includes a lid fastening hole (224a) to which the container lid (223b) is screw-coupled.

8. The battery pack (200, 200A) according to claim 1, wherein the cell unit (100) includes:
a cell stack including one battery cell (110) or two or more battery cells (110) stacked; and
a cell cover (120) covering both sides of the cell stack in a widthwise direction (X) of the cell stack and a bottom of the cell stack.

9. The battery pack (200, 200A) according to claim 1, wherein the cell cover (120) includes:
a first side cover portion (122) covering one side of the cell stack in a widthwise direction of the cell stack, and a second side cover portion (123) covering the other side of the cell stack; and
a lower cover portion (121) integrally formed with the first side cover portion (122) and the second side cover portion (123) and covering a bottom of the cell stack.

10. The battery pack (200, 200A) according to claim 9, wherein the battery pack (200, 200A) includes a busbar frame assembly (130) including a busbar (131) electrically connected to an electrode lead (111) of the battery cell (110), and disposed on each of a front side and a rear side of the cell stack in a lengthwise direction (Y) of the cell stack and coupled to the cell cover (120).

11. The battery pack (200, 200A) according to claim 1, further comprising:
a thermal insulation pad (P) between the cell units (100) among the plurality of cell units (100).

12. The battery pack (200, 200A) according to claim 11, wherein a second thermal resin (G2) is interposed between a lower cover portion (121) of the cell cover (120) and a surface of the pack tray (210).

13. The battery pack (200, 200A) according to claim 1, wherein the battery cell (110) is a pouch type battery cell (110).

14. A vehicle (V) comprising the battery pack (200, 200A) according to any one of claims 1 to 13.

## Patentansprüche

1. Batteriepack (200, 200A) aufweisend:
mehrere Zelleinheiten (100), die in einer Richtung (X) gestapelt sind, wobei jede Zelleinheit (100) einen Zellstapel aufweist, der eine Batteriezelle (110) oder zwei oder mehr Batteriezellen (110) enthält, die gestapelt sind, und eine Zellabdeckung (120), die den Zellstapel aufnimmt; und
ein Packgehäuse (200, 200A) mit einer Packablage (210), auf der die mehreren Zelleinheiten (100) sitzen, und einer Packabdeckung (220), die die mehreren Zelleinheiten (100) abdeckt und mit der Packablage (210) gekoppelt ist,
wobei die Zellabdeckung (120) einen oberen offenen Abschnitt derart aufweist, dass eine obere Oberfläche des Zellstapels nicht abgedeckt wird, und die Packabdeckung (220) eine Feuerlöschmaterialeingabezone (221) aufweist, um ein Feuerlöschmaterial in die Zellabdeckung (120) durch den oberen offenen Abschnitt der Zellabdeckung (120) zuzuführen, und
wobei zumindest ein Abschnitt der Feuerlöschmaterialeingabezone (221) derart konfiguriert ist, dass er heißgeschmolzen wird, so dass das Feuerlöschmaterial in die Zellabdeckung (120) zugeführt wird,
**dadurch gekennzeichnet, dass**
der Batteriepack (200, 200A) ferner aufweist:
ein erstes thermisches Harz (G1), das auf die obere Oberfläche des Zellstapels aufgebracht ist und in einem Endabschnitt und/oder dem anderen Endabschnitt des oberen offenen Abschnitts der Zellabdeckung (120) in einer Längsrichtung (Y) der Zellabdeckung (120) nicht vorhanden ist,
wobei die Packabdeckung (220) das erste thermische Harz (G1) berührt und die Feuerlöschmaterialeingabezone (221) an einer Stelle angeordnet ist, die dem einen Endabschnitt und/oder dem anderen Endabschnitt des oberen offenen Abschnitts der Zellabdeckung (120) vertikal zugewandt ist.

2. Batteriepack (200, 200A) nach Anspruch 1, wobei die Feuerlöschmaterialeingabezone (221) vertikal auf jeder Zelleinheit (100) angeordnet ist.

3. Batteriepack (200, 200A) nach Anspruch 1, wobei das Feuerlöschmaterial Kühlwasser ist, und
wobei die Packabdeckung (220) einen Strömungskanal (222) aufweist, innerhalb dessen das Kühlwasser strömt.

4. Batteriepack (200, 200A) nach Anspruch 3, wobei die Feuerlöschmaterialeingabezone (221) aufweist:
ein Loch (221b) in Verbindung mit dem Strömungskanal (222); und
eine Schmelzkappe (221a), die mit dem Loch (221b) gekoppelt ist und aus einem Heißschmelzharz hergestellt ist.

5. Batteriepack (200, 200A) nach Anspruch 1, wobei die Feuerlöschmaterialeingabezone (221) aufweist:
eine Feuerlöscheinheit (223), die einen Gasspeicherbehälter (223a), in dem komprimiertes Gas aufgenommen wird und der einen Gasauslass auf einer Seite aufweist, und einen Behälterdeckel (223b) aufweist, der aus einem Heißschmelzmaterial hergestellt ist und konfiguriert ist, um den Gasauslass zu schließen; und
ein Einheitsmontageloch (224), das durch die Packabdeckung (220) ausgebildet ist, um zu ermöglichen, dass die Feuerlöscheinheit (223) durch Presspassung mit dem Behälterdeckel (223b) gekoppelt wird, der dem oberen offenen Abschnitt der Zellabdeckung (120) zugewandt ist.

6. Batteriepack (200, 200A) nach Anspruch 5, wobei das komprimierte Gas Kohlendioxid ist.

7. Batteriepack (200, 200A) nach Anspruch 5, wobei der Behälterdeckel (223b) Schraubengewinde an einem Außenumfang aufweist und das Einheitsmontageloch (224) ein Deckelbefestigungsloch (224a) aufweist, mit dem der Behälterdeckel (223b) schraubgekoppelt ist.

8. Batteriepack (200, 200A) nach Anspruch 1, wobei die Zelleinheit (100) aufweist:
einen Zellstapel, der eine Batteriezelle (110) oder zwei oder mehr Batteriezellen (110) enthält, die gestapelt sind; und
eine Zellabdeckung (120), die beide Seiten des Zellstapels in einer Breitenrichtung (X) des Zellstapels und einen Boden des Zellstapels abdeckt.

9. Batteriepack (200, 200A) nach Anspruch 1, wobei die Zellabdeckung (120) aufweist:
einen ersten Seitenabdeckungsabschnitt (122), der eine Seite des Zellstapels in einer Breitenrichtung des Zellstapels abdeckt, und einen zweiten Seitenabdeckungsabschnitt (123), der die andere Seite des Zellstapels abdeckt; und
einen unteren Abdeckungsabschnitt (121), der einstückig mit dem ersten Seitenabdeckungsabschnitt (122) und dem zweiten Seitenabdeckungsabschnitt (123) ausgebildet ist und einen Boden des Zellstapels abdeckt.

10. Batteriepack (200, 200A) nach Anspruch 9, wobei der Batteriepack (200, 200A) eine Sammelschienenrahmenanordnung (130) aufweist, die eine Sammelschiene (131) aufweist, die elektrisch mit einer Elektrodenleitung (111) der Batteriezelle (110) verbunden ist und auf einer Vorderseite und einer Rückseite des Zellstapels in einer Längsrichtung (Y) des Zellstapels angeordnet ist und mit der Zellabdeckung (120) gekoppelt ist.

11. Batteriepack (200, 200A) nach Anspruch 1, ferner aufweisend:
ein Wärmeisolierpad (P) zwischen den Zelleinheiten (100) unter den mehreren Zelleinheiten (100).

12. Batteriepack (200, 200A) nach Anspruch 11, wobei ein zweites thermisches Harz (G2) zwischen einem unteren Abdeckungsabschnitt (121) der Zellabdeckung (120) und einer Oberfläche der Packablage (210) angeordnet ist.

13. Batteriepack (200, 200A) nach Anspruch 1, wobei die Batteriezelle (110) eine pouchförmige Batteriezelle (110) ist.

14. Fahrzeug (V) aufweisend den Batteriepack (200, 200A) nach einem der Ansprüche 1 bis 13.

## Revendications

1. Bloc-batterie (200, 200A), comprenant :
une pluralité d'unités de cellules (100) empilées dans une direction (X), chaque unité de cellules (100) comprenant un empilement de cellules incluant une cellule de batterie (110) ou deux ou plusieurs cellules de batterie (110) empilées et un couvercle de cellules (120) englobant l'empilement de cellules ; et
un boîtier (200, 200A) comprenant un plateau de boîtier (210) sur lequel sont installées la pluralité des unités de cellules (100), et un couvercle de boîtier (220) couvrant la pluralité des unités de cellules (100), et étant couplé au plateau de boîtier (210),
le couvercle de cellules (120) possédant une partie supérieure ouverte pour ne pas couvrir une surface supérieure de l'empilement de cellules, le couvercle de boîtier (220) possédant une zone d'introduction d'une matière d'extinction (221) afin d'introduire une matière d'extinction dans le couvercle de cellules (120) à travers la partie ouverte supérieure du couvercle de cellules (120), et
au moins une partie de la zone d'introduction d'une matière d'extinction (221) étant configurée pour être fondue thermiquement de façon à introduire la matière d'extinction dans le couvercle de cellules (120),
**caractérisé en ce que**
le bloc-batterie (200, 200A) comprend en outre :
une première résine thermique (G1) appliquée sur la surface supérieure de l'empilement de cellules, et n'étant pas présente dans au moins une d'une partie terminale ou de l'autre partie terminale de la partie ouverte supérieure du couvercle de cellules (120) dans le sens de la longueur (Y) du couvercle de cellules (120),
le couvercle de boîtier (220) étant au contact de la première résine thermique (G1), et la zone d'introduction d'une matière d'extinction (221) étant disposée dans un emplacement faisant face verticalement à au moins une d'une partie terminale ou de l'autre partie terminale de la partie ouverte supérieure du couvercle de cellules (120).

2. Bloc-batterie (200, 200A) selon la revendication 1, la zone d'introduction d'une matière d'extinction (221) étant disposée verticalement sur chaque unité de cellule (100).

3. Bloc-batterie (200, 200A) selon la revendication 1, la matière d'extinction étant l'eau de refroidissement, et,
le couvercle de boîtier (220) comprenant un conduit d'écoulement (222) à l'intérieur duquel s'écoule l'eau de refroidissement.

4. Bloc-batterie (200, 200A) selon la revendication 3, la zone d'introduction d'une matière d'extinction (221) comprenant :
un orifice (221b) en communication avec le conduit d'écoulement (222) ; et
un capuchon de fusion (221a) couplé à l'orifice (221b) et réalisé avec une résine thermo-fusible.

5. Bloc-batterie (200, 200A) selon la revendication 1, la zone d'introduction d'une matière d'extinction (221) comprenant :
une unité d'extinction (223) comprenant un réservoir de stockage de gaz (223a) dans lequel est introduit du gaz comprimé, et possédant un orifice de sortie de gaz sur un côté, et un couvercle de réservoir (223b) réalisé avec une matière thermo-fusible et configuré pour fermer l'orifice de sortie de gaz; et
un orifice de montage d'une unité (224) réalisé à travers le couvercle de boîtier (220) pour permettre le couplage de l'unité d'extinction (223) par ajustement serré au couvercle de réservoir (223b) faisant face à la partie ouverte supérieure du couvercle de cellule (120).

6. Bloc-batterie (200, 200A) selon la revendication 5, le gaz comprimé étant du gaz carbonique.

7. Bloc-batterie (200, 200A) selon la revendication 5, le couvercle de réservoir (223b) possédant un filetage sur une circonférence extérieure, et l'orifice de montage d'une unité (224) comprenant un orifice de fixation (224a) auquel le couvercle de réservoir (223b) est couplé par vissage.

8. Bloc-batterie (200, 200A) selon la revendication 1, l'unité de cellule (100) comprenant :
un empilement de cellules incluant une cellule de batterie (110) ou deux ou plusieurs cellules de batterie (110) empilées ; et
un couvercle de cellules (120) couvrant les deux côtés de l'empilement de cellules dans le sens de la largeur (X) de l'empilement de cellules et un fond de l'empilement de cellules.

9. Bloc-batterie (200, 200A) selon la revendication 1, le couvercle de cellules (120) comprenant :
une première partie de revêtement latéral (122) couvrant un côté de l'empilement de cellules dans un sens de la largeur de l'empilement de cellules, et une deuxième partie de revêtement latéral (123) couvrant l'autre côté de l'empilement de cellules ; et
une partie de revêtement inférieur (121) solidaire avec la première partie de revêtement latéral (122) et la deuxième partie de revêtement latéral (123) et couvrant un fond de l'empilement de cellules.

10. Bloc-batterie (200, 200A) selon la revendication 9, le bloc-batterie (200, 200A) comprenant un ensemble de cadre de barre omnibus (130) doté d'une barre omnibus (131) connectée électriquement à un conducteur d'électrode (111) de la cellule de batterie (110), et disposé sur chacun d'un côté antérieur et d'un côté postérieur de l'empilement de cellules dans un sens de la longueur (Y) de l'empilement de cellules, et couplé au couvercle de cellules (120).

11. Bloc-batterie (200, 200A) selon la revendication 1, comprenant en outre :
un tampon d'isolation thermique (P) entre les unités de cellule (100) parmi la pluralité d'unités de cellule (100).

12. Bloc-batterie (200, 200A) selon la revendication 11, une deuxième résine thermique (G2) étant intercalée entre une partie de revêtement inférieur (121) du couvercle de cellules (120) et une surface du plateau de boîtier (210).

13. Bloc-batterie (200, 200A) selon la revendication 1, la cellule de batterie (110) étant une cellule de batterie du type poche (110).

14. Véhicule (V) comprenant le bloc-batterie (200, 200A) selon une quelconque des revendications 1 à 13.
